# FASCICULE DE BREVET EUROPEEN

(11) **EP 0 876 974 B1**
(45) Date de publication et mention de la délivrance du brevet: **11.08.2004**
(21) Numéro de dépôt: 98401103.1
(22) Date de dépôt: 06.05.1998
(51) Int. Cl.: B65G 47/96, B65G 47/38

(54) **Dispositif de convoyage d'articles**
Fördervorrichtung für Gegenstände
Conveying device for articles

(30) Priorité: 07.05.1997 FR 9705669
(43) Date de publication de la demande: 11.11.1998
(73) Titulaire: XEDA INTERNATIONAL, 13670 Saint-Andiol (FR)
(72) Inventeur: Sardo, Stéfano, 13160 Chateaurenard (FR)
(74) Mandataire: Blot, Philippe Robert Emile

(56) Documents cités:
- EP-A- 0 662 435
- US-A- 5 497 887

## Description

La présente invention concerne un dispositif de convoyage d'articles du type comportant une ligne de convoyage mobile portant des organes mobiles d'éjection d'un article et une station d'éjection comprenant des moyens d'actionnement adaptés pour déplacer sélectivement lesdits organes d'éjection depuis une position de transport d'un article jusqu'à une position d'éjection dudit article.

L'invention s'applique en particulier au dispositif de convoyage de fruits d'une machine de calibrage automatique de fruits.

Une telle machine comporte une ligne de convoyage munie d'alvéoles pour le transport des articles. Chaque alvéole est délimité par la surface supérieure d'un organe mobile d'éjection d'un article. Les organes d'éjection sont articulés sur le convoyeur et forment des leviers. En outre, la structure fixe du dispositif de convoyage comporte des moyens d'actionnement adaptés pour commander la position de l'organe d'éjection entre une position de transport d'un article et une position d'éjection de cet article. En pratique, les moyens d'actionnement sont formés par un électro-aimant dont le bobinage est relié à une unité de pilotage et dont l'extrémité d'actionnement est adaptée pour coopérer directement ou indirectement avec l'un des bras de l'organe d'éjection formant levier.

Du fait des phénomènes électromagnétiques se produisant dans l'électro-aimant lors de son activation, la cadence d'actionnement de celui-ci est limitée à environ dix coups par seconde.

Cette cadence relativement faible impose parfois la présence des deux lignes de convoyage identiques disposées en parallèle.

Dans ce cas, les articles sont éjectés de part et d'autre de la direction de déplacement des lignes de convoyage. Il en résulte un encombrement important de la machine.

Un dispositif de convoyage comportant plusieurs moyens d'actionnement d'organes d'ejection d'un acticle est décrit dans le document US-5,497,887.

L'invention a pour but de foumir un dispositif de convoyage d'articles permettant une cadence élevée d'éjection des articles transportés par une même ligne de convoyage.

A cet effet, l'invention a pour objet un dispositif de convoyage d'articles selon la revendication 1.

Suivant des modes particuliers de réalisation, le dispositif de convoyage comporte l'une ou plusieurs des caractéristiques definies par les revendications dépendantes.

L'invention sera mieux comprise à la lecture de la description qui va suivre, donnée uniquement à titre d'exemple et faite en se référant aux dessins sur lesquels :
- la figure 1 est une vue partielle de dessus d'un dispositif de convoyage selon l'invention dans un tronçon comportant une station d'éjection ; et
- les figures 2 et 3 sont des vues en coupe transversale du dispositif de convoyage de la figure 1 prises suivant la ligne III-III, le dispositif étant représenté respectivement lors du passage de deux organes d'éjection successifs dans la station d'éjection.

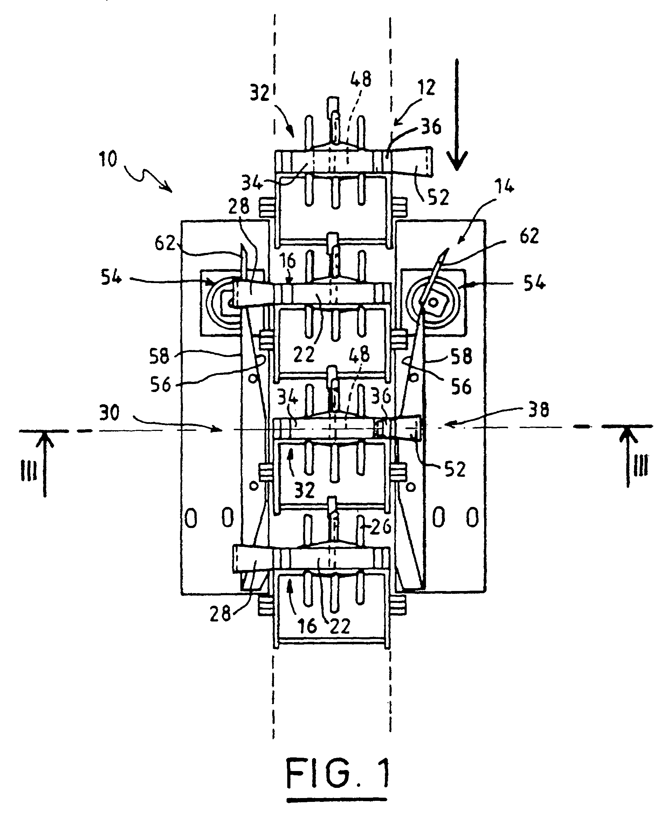

Sur les figures 1 à 3 est représenté un unique dispositif de convoyage 10 d'une machine de calibrage automatique d'articles tels que des fruits.

Le dispositif de convoyage 10 comporte essentiellement une ligne de convoyage mobile 12 portant des organes d'éjection et une station d'éjection 14 adaptée pour l'actionnement des organes d'éjection.

La ligne de convoyage 12 est refermée en boucle et est guidée, à chaque extrémité, sur deux rouleaux d'entraînement non représentés, de sorte que celle-ci forme un convoyeur sans fin.

La ligne de convoyage 12 se déplace successivement par exemple d'abord au travers d'une station de chargement de fruits, dans laquelle un fruit est déposé sur chaque organe d'éjection, puis au travers d'une station de calibrage de fruits munie d'au moins une balance de pesée et enfin au travers de la station d'éjection 14 qui est représentée sur les figures 1 à 3.

La ligne de convoyage 12 porte deux ensembles d'organes d'éjection distincts intercalés suivant la longueur de celle-ci.

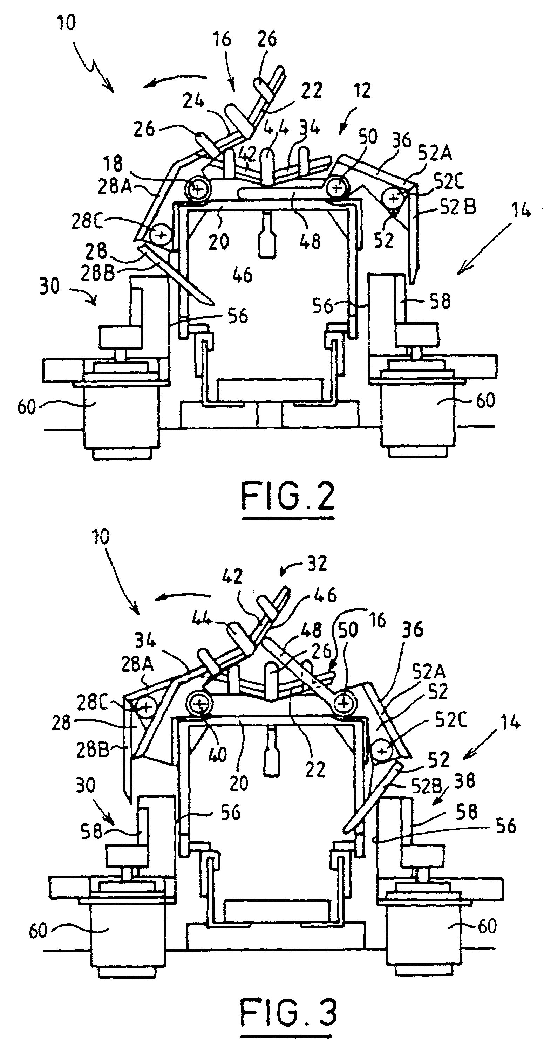

Les organes d'éjection du premier ensemble, désignés par la référence 16, sont formés chacun par un levier articulé autour d'un axe 18 s'étendant suivant la direction de déplacement de la ligne de convoyage. Chaque levier est articulé sur un élément de support distinct 20 de la ligne de convoyage depuis une position de transport représentée sur la figure 3 jusqu'à une position d'éjection représentée sur la figure 2.

Chaque organe d'éjection 16 comporte un premier bras 22 de recueil d'un article. Celui-ci comporte, sur sa surface supérieure une surface concave 24 de recueil du fruit bordée par six doigts latéraux de maintien 26 répartis de part et d'autre du bras 22. Le bras 22 délimite ainsi un alvéole de transport d'un article.

Chaque organe d'éjection 16 comporte en outre un second bras 28 définissant un angle obtus avec le premier bras 22, le sommet de l'angle étant localisé au voisinage de l'axe 18. Le second bras 28 forme un bras d'actionnement de l'organe d'éjection et est adapté pour coopérer avec des moyens d'actionnement complémentaires 30 solidaires de la structure fixe du convoyeur et intégrés à la station d'éjection 14.

Le bras d'actionnement 28 comporte deux tronçons successifs indépendants 28A, 28B articulés l'un sur l'autre par l'intermédiaire d'une charnière 28C. La charnière 28C est équipée d'un ressort de rappel des deux tronçons visant à écarter ceux-ci l'un de l'autre. Un tel éjecteur est décrit plus en détail dans la demande FR-A-94-00216.

Les premiers bras 22 s'étendent essentiellement au-dessus de la ligne de convoyage 12 alors que les seconds bras 28, formant bras d'actionnement, s'étendent tous essentiellement sur un même côté de la ligne de convoyage (côté gauche sur les figures).

En outre, la ligne de convoyage 12 comporte un second ensemble d'organes mobiles d'éjection, notés 32, chacun intercalé entre deux organes d'éjection successifs 16 du premier ensemble.

Chaque organe d'éjection 32 du second ensemble comporte d'une part un levier d'éjection 34 et d'autre part un levier complémentaire 36 adapté pour déplacer le levier d'éjection 34 depuis sa position de transport d'un article, représentée sur la figure 2, jusqu'à sa position d'éjection d'un article, représentée sur la figure 3.

A cet effet, la station d'éjection 14 comporte des moyens d'actionnement 38, disposés du côté opposé et symétriquement aux moyens d'actionnement 30.

Le levier 34 est articulé sur un élément de support 20 autour d'un axe 40 s'étendant dans le prolongement des axes d'articulation 18 des organes d'éjection 16 du premier ensemble. Le levier 34 comporte sur sa surface supérieure une surface concave 42 bordée par six doigts 44. Comme pour l'organe d'éjection 16, cette surface concave délimite un alvéole destiné au recueil d'un article.

La surface inférieure du levier 34, notée 46, constitue une surface d'actionnement adaptée pour coopérer avec l'extrémité d'un premier bras 48 du levier complémentaire 36. Ce bras 48 forme un bras de commande du levier d'éjection 34.

Le levier complémentaire 36 est articulé autour d'un axe 50 s'étendant parallèlement à l'axe 40 et disposé symétriquement sur le côté opposé du même élément 20 de la ligne de convoyage. Le levier 36 comporte un second bras 52, prolongeant le premier bras 48, de l'autre côté de l'axe 50. Le second bras 52, formant un bras d'actionnement de l'éjecteur, délimite un angle obtus avec le premier bras 48 et est adapté pour coopérer avec les moyens d'actionnement 38. Comme le bras d'actionnement 28, il comporte deux tronçons 52A, 52B articulés par l'intermédiaire d'une charnière élastique 52C.

Les bras de commande 48 des leviers complémentaires s'étendent essentiellement sur le dessus de la ligne de convoyage 12, au-dessous des leviers d'éjection 34.

Les bras d'actionnement 52 des leviers complémentaires s'étendent tous essentiellement d'un même côté de la ligne de convoyage (côté droit sur les figures).

Comme représenté sur la figure 1, les moyens d'actionnement 30 et 38 de la station d'éjection 14 sont disposés chacun d'un côté de la ligne de convoyage 12 et sont symétriques l'un de l'autre par rapport à l'axe longitudinal de cette ligne.

Chacun des moyens d'actionnement 30, 38 comporte, suivant le sens de déplacement de la ligne de convoyage, des moyens d'aiguillage 54 adaptés pour diriger respectivement le bras d'actionnement 28 ou le bras d'actionnement 52. Ce bras est dirigé suivant la position des moyens d'aiguillage soit vers une rampe 56 formant surface de came adaptée pour l'actionnement du bras, soit vers une voie rectiligne 58 d'évitement de la surface de came 56. Cette surface de came 56 est adaptée pour solliciter et déplacer le bras d'actionnement 28 ou 52 vers la ligne de convoyage 12 lorsque l'organe d'éjection passe dans la station 14.

Les moyens d'aiguillage comportent un actionneur à débattement angulaire formé par exemple par un électro-aimant 60. Cet électro-aimant commande une lame d'aiguillage 62 déplaçable entre une position prolongeant la surface de came 56 et une position dans laquelle elle prolonge la voie rectiligne 58.

Les moyens d'aiguillage 54 sont commandés par une unité de pilotage de la machine afin de diriger le bras d'actionnement 28 ou 52 de l'organe d'éjection considéré vers la surface de came 56 disposée du côté associé au levier lorsque l'article transporté doit être éjecté ou laisser celui-ci circuler suivant la voie rectiligne 58 lorsque l'article ne doit pas être éjecté.

Comme cela est représenté sur la figure 2, pour les organes d'éjection 16 du premier ensemble d'organes d'éjection, le bras d'actionnement 28 coopérant avec la surface de came associée 56 provoque le basculement du levier formant l'organe 16. Ainsi, la surface 24 se trouve inclinée de sorte que l'article posé sur celle-ci glisse sous l'effet de son propre poids et tombe sur la gauche de la ligne de convoyage 12.

Comme représenté sur la figure 3, les organes d'éjection 32 du second groupe éjectent un article lorsque le bras d'actionnement 52 coopérant avec la surface de came 56 provoque le basculement du levier complémentaire 36. Par l'intermédiaire du bras de commande 48, coopérant avec la surface inférieure d'actionnement 46, le levier complémentaire 36 soulève le bras du levier d'éjection 34 de sorte que la surface de recueil 42 est inclinée vers la gauche. Comme précédemment, l'article reposant sur celle-ci glisse sous l'effet de son propre poids et tombe sur le côté gauche de la ligne de convoyage 12.

On comprend qu'avec un tel dispositif, les moyens d'actionnement 30 et 38 sont adaptés respectivement pour l'actionnement des organes d'éjection 16 et 32 des premier et second ensembles.

En fonctionnement, les moyens d'actionnement 30, 38 sont activés successivement et alternativement lors du passage des organes d'éjection successifs dans la station d'éjection. En particulier, chacun des moyens d'actionnement est activé pour un organe d'éjection sur deux circulant dans la station d'éjection.

Ainsi, les moyens d'aiguillage associés à un ensemble d'organes d'éjection peuvent être commandés et déplacés pendant l'éjection d'un article supporté par un organe d'éjection de l'autre ensemble.

Dans ces conditions, le temps pour la commutation des moyens d'aiguillage est considérablement allongé de sorte que la vitesse de la ligne de convoyage peut être augmentée sans que la vitesse de commande des moyens d'aiguillage 54 ne soit limitante.

Ainsi, la cadence de la ligne de convoyage peut être doublée.

En particulier, si chaque moyen d'actionnement 30, 38 fonctionne avec une cadence de dix coups par seconde, cette cadence étant compatible avec les impératifs liés à l'utilisation d'électro-aimants, alors la vitesse de la ligne de convoyage peut être telle que vingt organes d'éjection par seconde passent dans la station d'éjection et sont basculés par l'un ou l'autre des deux moyens d'actionnement.

En outre, avec l'agencement décrit ici, tous les articles sont éjectés du même côté de la ligne de convoyage de sorte que l'encombrement total de la machine est réduit.

## Revendications

1. Dispositif de convoyage d'articles du type comportant une ligne de convoyage mobile (12) portant un premier ensemble d'organes mobiles (16) d'éjection d'un article et une station d'éjection (14) comprenant des premiers moyens d'actionnement (30) adaptés pour déplacer sélectivement lesdits organes d'éjection (16) dudit premier ensemble depuis une position de transport d'un article jusqu'à une position d'éjection dudit article, le dispositif comportant un second ensemble d'organes mobiles (32) d'éjection d'un article porté par ladite ligne de convoyage (12), les organes d'éjection (32) du second ensemble étant intercalés entre les organes d'éjection (16) du premier ensemble suivant la longueur de la ligne de convoyage (12), et ladite station d'éjection (14) comportant des seconds moyens d'actionnement (38) adaptés pour déplacer lesdits organes d'éjection (32) dudit second ensemble depuis une position de transport d'un article jusqu'à une position d'éjection dudit article, lesdits organes d'éjection (16, 32) des premier et second ensembles étant des organes d'éjection latérale des articles, adaptés pour éjecter les articles d'un même côté de la ligne de convoyage (12), **caractérisé en ce que** les premiers et seconds moyens d'actionnement (30, 38) sont disposés chacun d'un côté de la ligne de convoyage (12) et symétriquement par rapport à la ligne de convoyage (12).

2. Dispositif de convoyage selon la revendication 1, **caractérisé en ce que** chaque organe d'éjection (16, 32) comporte un levier d'éjection (16, 34) articulé sur la ligne de convoyage (12).

3. Dispositif de convoyage selon la revendication 2, **caractérisé en ce qu'**il comporte au moins un levier complémentaire (36) articulé autour d'un axe (50) s'étendant parallèlement à la direction de déplacement de la ligne de convoyage (12), ledit levier complémentaire (36) étant adapté pour coopérer d'une part avec lesdits seconds moyens d'actionnement (38) et d'autre part avec le levier d'éjection (34) d'un organe d'éjection (32) du second ensemble pour déplacer ledit levier d'éjection (34) depuis sa position de transport jusqu'à sa position d'éjection sous la commande desdits seconds moyens d'actionnement (38).

4. Dispositif de convoyage selon la revendication 3, **caractérisé en ce que** chaque organe d'éjection (32) du second ensemble comporte un dit levier complémentaire (36), lesdits leviers complémentaires (36) étant portés par ladite ligne de convoyage (12) et articulés sur celle-ci.

5. Dispositif de convoyage selon l'une quelconque des revendications 2 à 4, **caractérisé en ce que** chacun des moyens d'actionnement (30, 38) comporte un organe d'aiguillage (54) commandable, adapté pour, lors du déplacement d'un organe d'éjection (16, 32) dans la station d'éjection (14), diriger le bras (28, 52) de l'un du levier d'éjection (16) et du levier complémentaire (36) soit vers une surface de came (56) pour provoquer le basculement de l'organe d'éjection (16, 32), soit vers une voie d'évitement (58) de ladite came (56) pour maintenir l'organe d'éjection (16, 32) dans sa position de transport.

## Patentansprüche

1. Vorrichtung zur Förderung von Artikeln, umfassend eine bewegliche Förderstrecke (12), die eine erste Einheit von beweglichen Organen (16) zum Ausstoß eines Artikels und eine Ausstoßstation (14) trägt, die erste Betätigungsmittel (30) aufweist, die dafür ausgelegt sind, die Ausstoßorgane (16) der ersten Einheit wahlweise von einer Stellung des Transports eines Artikels in eine Stellung des Ausstoßes dieses Artikels zu bewegen, wobei die Vorrichtung eine zweite Einheit von beweglichen Organen (32) zum Ausstoß eines von der Förderstrecke (12) getragenen Artikels aufweist, wobei die Ausstoßorgane (32) der zweiten Einheit in der Länge der Förderstrecke (12) zwischen die Ausstoßorgane (16) der ersten Einheit eingesetzt sind, und die Ausstoßstation (14) zweite Betätigungsmittel (38) aufweist, die dafür ausgelegt sind, die Ausstoßorgane (32) der zweiten Einheit von einer Stellung des Transports eines Artikels in eine Stellung des Ausstoßes dieses Artikels zu bewegen, wobei diese Ausstoßorgane (16, 32) der ersten und der zweiten Einheit Organe zum seitlichen Ausstoß der Artikel sind, die dafür ausgelegt sind, die Artikel auf derselben Seite der Förderstrecke (12) auszustoßen, **dadurch gekennzeichnet, daß** die ersten und zweiten Betätigungsmittel (30, 38) jeweils auf einer Seite der Förderstrecke (12) und bezüglich der Förderstrecke (12) symmetrisch angeordnet sind.

2. Fördervorrichtung nach Anspruch 1, **dadurch gekennzeichnet, daß** jedes Ausstoßorgan (16, 32) einen Ausstoßhebel (16, 34) aufweist, der an der Förderstrecke (12) angelenkt ist.

3. Fördervorrichtung nach Anspruch 2, **dadurch gekennzeichnet, daß** sie mindestens einen zusätzlichen Hebel (36) aufweist, der an einer zur Bewegungsrichtung der Förderstrecke (12) parallelen Achse (50) angelenkt ist, die dafür ausgelegt ist, einerseits mit den zweiten Betätigungsmitteln (38) und andererseits mit dem Ausstoßhebel (34) eines Ausstoßorgans (32) der zweiten Einheit zusammenzuwirken, um diesen Ausstoßhebel (34) unter der Steuerung durch die zweiten Betätigungsmittel (38) von seiner Transportstellung in seine Ausstoßstellung zu bewegen.

4. Fördervorrichtung nach Anspruch 3, **dadurch gekennzeichnet, daß** jedes Ausstoßorgan (32) der zweiten Einheit einen zusätzlichen Hebel (36) aufweist, wobei diese zusätzlichen Hebel (36) von der Förderstrecke (12) getragen werden und an dieser angelenkt sind.

5. Fördervorrichtung nach einem der Ansprüche 2 bis 4, **dadurch gekennzeichnet, daß** jedes der Betätigungsmittel (30, 38) ein steuerbares Leitorgan (54) aufweist, das dafür ausgelegt ist, bei der Bewegung eines Ausstoßorgans (16, 32) in der Ausstoßstation (14) den Arm (28, 52) eines des Ausstoßhebels (16) und des zusätzlichen Hebels (36) entweder zu einer Steuerfläche (56) zu lenken, um das Verschwenken des Ausstoßorgans (16, 32) zu bewirken, oder zu einer diese Steuerbahn (56) vermeidenden Bahn (58) zu lenken, um das Ausstoßorgan (16, 32) in seiner Transportstellung zu halten.

## Claims

1. Device for conveying articles of the type comprising a movable conveying line (12) which carries a first set of movable members (16) for ejecting an article and an ejection station (14) which comprises first activation means (30) which can selectively displace the ejection members (16) of the first set from a position for transporting an article to a position for ejecting the article, the device comprising a second set of movable members (32) for ejecting an article which is carried by the conveying line (12), the ejection members (32) of the second assembly being interposed between the ejection members (16) of the first set over the length of the conveying line (12), and the ejection station (14) comprising second activation means (38) which can displace the ejection members (32) of the second set from a position for transporting an article to a position for ejecting the article, the ejection members (16,32) of the first and second sets being members for laterally ejecting the articles, which can eject the articles at the same side of the conveying line (12), **characterised in that** the first and second activation means (30,38) are each arranged at one side of the conveying line (12) and symmetrically relative to the conveying line (12).

2. Conveying device according to claim 1, **characterised in that** each ejection member (16,32) comprises an ejection lever (16,34) which is articulated to the conveying line (12).

3. Conveying device according to claim 2, **characterised in that** it comprises at least one complementary lever (36) which is articulated about an axis (50) which extends in parallel with the direction of displacement of the conveying line (12), the complementary lever (36) being able to co-operate, at one side, with the second activation means (38) and, at the other side, with the ejection lever (34) of an ejection member (32) of the second set in order to displace the ejection lever (34) from the transport position to the ejection position thereof under the control of the second activation means (38).

4. Conveying device according to claim 3, **characterised in that** each ejection member (32) of the second set comprises a complementary lever (36), the complementary levers (36) being carried by the conveying line (12) and being articulated thereto.

5. Conveying device according to any one of claims 2 to 4, **characterised in that** each of the activation means (30,38) comprises a controllable switching member (54) which can, when an ejection member (16,32) is displaced in the ejection station (14), direct the arm (28,52) of one of the ejection lever (16) and the complementary lever (36) either towards a cam surface (56) in order to bring about the tilting of the ejection member (16,32) or towards a path (58) for avoiding the cam (56) in order to maintain the ejection member (16,32) in the transport position thereof.
